# EUROPEAN PATENT APPLICATION

(11) **EP 4 079 501 A1**
(43) Date of publication of application: **26.10.2022**
(21) Application number: 21169429.4
(22) Date of filing: 20.04.2021
(51) Int. Cl.: B32B 1/00, B32B 3/26, B32B 3/30, B32B 27/08, B32B 27/30, B32B 27/32, B32B 27/34, B32B 27/36

(54) **AN INTERMEDIATE LAYER FOR A SANDWICH PANEL**

(71) Applicant: Paneltim N V, 8810 Lichtervelde (BE)
(72) Inventor: Baetens, Jens, 1790 Hekelgem (BE)
(74) Representative: IP HILLS NV

(57) **Abstract**

An intermediate layer for a sandwich panel is provided. The intermediate layer has a first open side and a second side. The intermediate layer comprises a plurality of cells, each cell having a cell circumference being defined by a plurality of walls, the plurality of walls comprising at least a first pair of walls that are mutually parallel along a direction and at least two or more further walls, each further wall being non-parallel to the first pair of walls. For each part of the cell circumference between the first wall of the first pair of mutually parallel walls and the second wall of the first pair of mutually parallel walls, the part of the cell circumference comprises at least one of the at least two or more further walls. This part of the cell circumference comprises at least one opening extending from the first open side towards the second side. The second side is one of an open side and a closed side being closed by a sheet, said sheet having a perimetrical edge whose height along the perimetrical edge is less than the height of the walls.

## Description

### Field of the Invention

The present invention relates to intermediate layers for a sandwich panel, sandwich panels comprising such intermediate layers and methods to make sandwich panels.

### Background of the Invention

Sandwich panels comprising intermediate layers, typically honeycomb structures, are well known in the art. Such sandwich panels are usually flat and hence not adapted to form curved volumes or surfaces.

Curved sandwich panels are also known from e.g. US 2019/0283345. These bended or curved sandwich panels are provided with thermoset outer layers. The process described in US 2019/0283345 does not allow thick sandwich panels to be provided in curved state.

There is a need for a simple method to provide curved or bended sandwich panels, which allow the provision of a sandwich panel from thermoplastic material, in the intermediate layer as well as the outer layers of surfaces. There is a need for bended or curved sandwich panels, which can be joined one to the other side by side by means of welding equipment, thereby providing so called but-to-but welded sandwich panels. The invention allows to provide sandwich panels in curved state, independent the thickness of the intermediate layer.

### Summary of the Invention

According to a first independent aspect of the invention, an intermediate layer for a sandwich panel is provided. The intermediate layer has a first open side and a second side. The intermediate layer comprises a plurality of cells, each cell having a cell circumference being defined by a plurality of walls, the plurality of walls comprising at least a first pair of walls that are mutually parallel along a direction and at least two or more further walls, each further wall being non-parallel to the first pair of walls.

For each part of the cell circumference between the first wall of the first pair of mutually parallel walls and the second wall of the first pair of mutually parallel walls, the part of the cell circumference comprises at least one of the at least two or more further walls. This part of the cell circumference comprises at least one opening extending from the first open side towards the second side. The second side is one of an open side and a closed side being closed by a sheet, said sheet having a perimetrical edge whose height along the perimetrical edge is less than the height of the walls.

According to preferred embodiments, the at least one opening may extend from the fist open side up to the second side.

The height of the edge and the height of the wall is the length along the direction from the first to the second side of the intermediate.

In case the second side is a closed side being closed by a sheet, the sheet having a perimetrical edge whose height is less than the height of the walls, the height of the peripheral edges is preferably 75% or less of the height of the walls, such as 50% or less of the height of the walls. Possibly there is even no elevation at the peripheral edges, the height of the peripheral edges being 0% of the height of the walls. Hence, the height of the peripheral edge preferably varies between 0 and 75% of the height of the walls, such as between 0% and 50% of the height of the walls.

The sides, open of closed, may be planar or curved. Both sides are preferably parallel. At the open sides, any material is absent except the material of the edges of the wall extending along this open side.

A wall is a piece of material having two mutually parallel faces, the faces being delimited by at least four edges. The faces may be flat, bended or waved. Each wall has two edges parallel to the sides, and two edges being unparallel, and possible substantially perpendicular, to one or both of the sides.

The intermediate layer comprises a plurality of cells. Each of the cells may comprise at least two further walls which possibly may have one or even have two free edge, i.e. edges which are unconnected to a further wall, which may be optionally a wall from the first pair of walls.

The cells may comprise more than two further walls. Some of these further walls may be connected to a wall by both of its edges being perpendicular to the one or to both sides, one of these connected edged possibly be connected to one of the walls of the first pair of walls.

Hence for each further wall, or each series of further walls, which bridges the distance between the two walls of the first pair of mutually parallel walls, this one or this series of walls comprises at least one opening extending from the first open side towards the second side (being open or closed), even from the first open side up to the second side.

Because of the particular set-up of the intermediate, both flat and curved sandwich panels can quite easily be made during production using the very same intermediate layer. This independent of the thickness of the intermediate, hence the thickness of the final sandwich layer to be provided. The intermediate layer is bendable with a bending axis parallel to the direction of the first pair of walls. The axis of bending may be located at the first open side of the intermediate layer, i.e. the side to which the openings in the part of the circumference bridging the two walls of the first pair of walls are oriented. In case of a first open side and a second open side, and openings extending from the first side up to the second side, the intermediate layer may bend tot each of the sides or may even be waved, having a first bending towards the first open side and a second bending towards the second open side.

The two walls of the first pair of mutually parallel walls are not interconnected or not completely interconnected over the height of the wall, by one or a series of other walls. In each possible linkage between the two walls of the first pair of mutually parallel walls, there is at least one position in the circumference of the cell where the circumference is at least partially open. Usually, two linkages between the two walls of the first pair of mutually parallel walls, each comprising at least an opening, are provided. As the two opposite parallel walls of the first pair of walls are not interconnected or not completely interconnected over the height of the wall by means of other walls, each part of the circumference of the cell bridging the first wall of the pair of mutually parallel walls with the second of the first pair of mutually parallel walls comprising an opening or even is interrupted at least once. Because of these openings, the two walls being present adjacent these openings may bend one to the other, hence may bend into the open area of the opening, during a curving step while producing a sandwich panel. In such production process, one or both open sides of the intermediate are closed by a sheet or layer of material. As such, curved (or bended) sandwich panels or structures may be provided. These curved sandwich panels still can be but-to-but welded using the same tools as used for flat sandwich panels and can be handled in the very same way using the same means. However, they facilitate the provision of curved surfaces and volumes when being mounted adjacent one to the other.

The two opposite parallel walls of the first pair of walls are not interconnected or not completely interconnected over the height of the wall. As a consequence, in case also the second side is an open side, the intermediate may be a number of columns of individual sets of walls. In this case, the two walls of the first pair of walls may be linked to each other by means of a strip of material, also referred to as spacer, in order to provide one integral intermediate layer. The first pair of walls may be linked to each other by means of a strip of material, parallel to the outer sides and possibly coupled to the upper or lower edges of the two walls of the first pair of walls or provided at about half the height of the wall. Such spacers will not hinder the bending or curving of the intermediate layer according to the invention.

So, according to some embodiments, the first pair of walls may be linked to each other by means of a strip of material, i.e. the spacer. The spacers may be strips of material being about perpendicular to the walls and/or parallel to the open side. The spacers preferably have a thickness being in the range of only 0,5 mm to 10 mm, such as between 1 mm and 7 mm, e.g. 5 mm. The preferred thickness range is relative to the wall thickness, the thickness of the spacer is less than, or equal to the wall thickness. Though the position of the spacers may be at any point between the first and second side of the intermediate, the position of the spacers is preferably at the bottom of the walls, at the top of the walls or closer to the second side, e.g. about halfway, such as in the middle of the height of the walls.

According to some embodiments, the further walls may comprise a second pair of parallel walls, each of the walls of these second pair of walls being connected to a different wall of the first pair of walls. According to some embodiments, the further walls may comprise a second pair of parallel walls, each of the walls of these second pair of walls being connected to the same wall of the first pair of walls. Optionally, the further walls may comprise a third pair of parallel walls, the walls of these third pair of walls being connected to the wall of the first pair of walls, different from the wall of the first pair of walls to which the second pair of walls are connected. Optionally the walls of the third pair of walls are parallel but non-connected, i.e. connection free, to the walls of the second pair of walls.

According to some embodiments, the cells' circumference may be polygonal, such as quadrilateral. The quadrilateral cells may be rectangular or square. They may all have the same circumference or may differ in circumference in length and/or width. According to some embodiments, the cells' circumference may be hexagonal. The hexagonal cells may be regular hexagon cells.

According to some embodiments, the cells' circumference is hexagonal, the cells comprise a first group of cells, which cells of the first group of cells comprise further walls, these further walls comprise a second and a third pair of walls. The walls of the second pair of wall are parallel to each other. The walls of the third pair of wall are parallel to each other as well. Each of the walls of the first pair of walls is coupled to one of the walls of the second pair of walls and to one of the walls of the third pair of walls.

According to some embodiments, an intermediate layer with hexagonal cells is provided, wherein the cells comprise a first group of cells, the cells of the first group of cells comprise further walls, which further walls comprise a second and a third pair of walls. The walls of each pair are parallel. For the walls the following applies:
a. the first wall of the second pair of walls is connected to both a first wall of the first pair of walls and a first wall of the third pair of walls; and
b. the second wall of the second pair of walls is connected to only a second wall of the third pair of walls; and
c. the second wall of the third pair of walls is connected to both the first wall of the first pair of walls and the second wall of the second pair of walls; and
d. the first wall of the third pair of walls is connected to only the second wall of the second pair of walls.

According to some embodiments, an intermediate layer with hexagonal cells is provided, wherein the cells comprise a first group of cells, the cells of the first group of cells comprise further walls, these further walls comprise a second and a third pair of walls. The walls of each pair are parallel. For the walls the following applies:
a. the first wall of the second pair of walls is connected to both a first wall of the first pair of walls and a first wall of the third pair of walls; and
b. the second wall of the second pair of walls is connected to both the second wall of the first pair of walls and a second wall of the third pair of walls; and
c. the first wall of the third pair of walls is connected to only the first wall of the second pair of walls; and
d. the second wall of the third pair of walls is connected to only the second wall of the second pair of walls.

According to some embodiments, the intermediate layer may be provided from polymeric material, such as thermoplastic polymeric material. The intermediate may be injection moulded.

This provision enables the production of sandwich panels, flat or bended, using intermediate heating of the edges of the walls which are parallel to the open sides. By heating these edges, the walls soften to some extend and are more easily deformable along the edges being parallel to the open sides. The softened edges may be used to stick to the possible sheet layer or layers applied to the open side or sides. In the alternative, the edges parallel to the open sides may be glued to possible sheet layers applied to this open side or these open sides. According to some embodiments, the intermediate layer may be injection moulded. This technique allows a rather easy way to provide rather complex combinations and set-up of walls, hence may provide the intermediate layer in a cost and work efficient way. The sheets or layers used to close the open side(s) of the intermediate may by extruded polymeric sheets or layers.

According to some embodiments, the second side is closed, the walls and the sheet closing the second side being provide simultaneously by the same injection moulding action. The sheet closing the second side may be provided from polymeric material, such as thermoplastic polymeric material.

According to a second independent aspect of the present invention, a sandwich panel is provided. The sandwich panel comprises a first outer layer and at least one intermediate layer according to the first aspect of the invention, the first open side of said intermediate layer being attached to the first outer layer.

Possibly, in case the intermediate has a first and a second open side, the sandwich panel may comprise further a second outer layer, the second open side of the intermediate layer being attached to this second outer layer.

According to a third independent aspect of the present invention, a sandwich panel is provided, the sandwich panel comprises a first outer layer and at least one intermediate layer attached to the first outer layer, the intermediate layer comprising a first open side and a second side, the first outer layer being attached to the first open side. The intermediate layer comprises a plurality of cells, each cell having a cell circumference being defined by a plurality of walls. The plurality of walls comprises at least a first pair of walls that are mutually parallel and at least two or more further walls, each further wall being non-parallel to the first pair of walls. For each part of the cell circumference between the first wall of the first pair of mutually parallel walls and the second wall of the first pair of mutually parallel walls, the part of the cell circumference comprises at least one of the at least two or more further walls and this part of the cell circumference comprises at least one opening extending from the first open side towards the second side. The second side is one of an open side and a closed side being closed by a sheet, the sheet having a perimetrical edge whose height is less than the height of the walls.

According to some embodiments, the second side may be an open side. According to some embodiments, the sandwich panel further may comprise a second outer layer, the second side being attached to this second outer layer.

The at least one opening may extend from the fist open side up to the second open side.

Optionally, in case the second side is an open side, the sandwich panel may comprise a second outer layer, the second outer layer being attached to the second open side of the intermediate layer.

The first and optionally the second outer layer is coupled to the at least one intermediate layer. This attachment between the first outer layer and the intermediate, and if applicable between the second outer layer and the intermediate, may be realised preferably by thermal coupling, such as thermal welding. Alternatively, the attachment is realised by gluing. The intermediate layer is a clearly distinct layer which was attached to the outer layer or to the outer layers.

According to some embodiments, the second outer layer may be provided from polymeric material, such as thermoplastic polymeric material. The second outer layer may be an extruded layer.

So according to some embodiments, the second side is an open side, the sandwich panel further comprising a second outer layer, the second side being attached to this second outer layer, the first outer layer and the second outer layer are provided from polymeric material and are extruded layers, the intermediate layer is provided from polymeric material, the intermediate layer is injection moulded, the sandwich panel is a flat sandwich panel.

According to some embodiments, the second side may be a closed side closed by a sheet, this sheet having a perimetrical edge whose height is less than the height of the walls.

According to a fourth independent aspect of the invention, a sandwich panel is provided which sandwich panel comprising a first outer layer and at least one intermediate layer attached to the first outer layer. The intermediate layer comprises a first open side and a second side, the first outer layer being attached to the first open side. The intermediate layer comprises a plurality of cells, each cell having a cell circumference being defined by a plurality of walls, said plurality of walls comprising at least a first pair of walls that are mutually parallel and at least two or more further walls, each further wall being non-parallel to the first pair of walls. For each part of the cell circumference between the first wall of the first pair of mutually parallel walls and the second wall of the first pair of mutually parallel walls, this part of the cell circumference comprises at least one of the at least two or more further walls and the part of the cell circumference comprises at least one opening extending from the first open side towards the second side. The second side is a closed side being closed by a sheet, which sheet has a perimetrical edge, the height of the perimetrical edge at least along the part of the perimetrical edges being non-perpendicular to the direction of the first pair of walls, is less than the height of the walls.

Preferably the first outer layer is a flat plate. Preferably this sandwich panel is curved according to an axis of curvature being parallel to the direction of the first pair of walls.

Features and embodiments of the first, second, third or fourth aspect of the invention may be combined with features of the other aspect of the invention.

According to some embodiments of the second, third or fourth aspect of the invention, the sandwich panel may comprise an intermediate layer being provided from polymeric material, such as thermoplastic polymer material while the intermediate layer is injection moulded.

According to some embodiments of the second, third or fourth aspect of the invention, the first outer layer is provided from polymeric material, this first outer layer being an extruded layer.

According to some embodiments of the second, third or fourth aspect of the invention, the second side is an open side, the sandwich panel further comprising a second outer layer. The second side is attached to this second outer layer, the first outer layer and said second outer layer are provided from polymeric material and are extruded layers. The intermediate layer is provided from polymeric material, said intermediate layer is injection moulded. The sandwich panel may be a bended or a flat sandwich panel.

According to some embodiments of the second, third or fourth aspect of the invention, the sandwich panel may be a flat sandwich panel or a bended, curved sandwich panel. The sandwich panel possibly is curved along an axis of curvature. According to some embodiments of the second, third or fourth aspect of the invention, the sandwich panel is curved, the axis of curvature being parallel to the direction of the first pair of walls. The axis of curvature may be parallel to the first outer layer and/or the second outer layer, or the sheet at the second side of the intermediate. The radius of curvature is preferably in the range of more than0,25 m, such as more than 0,4m, e.g. 0,5 m or more, e.g. between 0,25m and 25m.

Between two adjacent and coplanar walls of the first pair of walls, each of the adjacent walls being part of adjacent cells, the walls may be uninterrupted or interrupted by one or more openings. When interrupted by one or more openings, the intermediate, and the sandwich panels comprising such intermediate, may be bidirectionally bended or curved, one axis of curvature being an axis of curvature parallel to the direction of the first pair of walls, the other axis of curvature being an axis of curvature non-parallel, optionally even perpendicular to the direction of the first pair of walls.

Where two walls meet, typically under an angle, the angle may be reinforced by a corner piece. Preferably the corner piece is a relatively thin sheet of material, oriented perpendicular to the two walls for which it serves to reinforce the mutual angle. The corner piece may be provided at about half the height of the walls.

The intermediate preferably is injection moulded. The intermediate is preferably made from polymeric material, such as thermoplastic polymeric material. Any suitable thermoplastic polymer material may be used, such as but not restricted to polyamide (PA), polyolefins, like polyethylene (PE) and polypropylene (PP), polyethylene terephthalate (PET), polyvinylchloride (PVC), and alike.

The walls of the intermediate layer may preferably have a wall thickness in the range of 0,75 mm and 9 mm, e.g. 1 mm to 8 mm, and a height in the range of 10 mm to 250 mm, e.g. between 10 mm and 125 mm. More preferred, the wall thickness is in the range of 1 mm to 8 mm, and the height is in the range of 10 mm and 125 mm. When sheets are used to close the open sides, the sheets, which optionally may be injection moulded or extruded polymeric material, such as polymeric thermoplastic material, may have a thickness in the range of 5 mm to 20 mm such as in the range of 5 to 17 mm. When more than one sheet is used, e.g. one at each side of the intermediate layer, identical or different sheets may be used. Suitable material for such sheets is thermoplastic polymers such as but not restricted to polyamide (PA), polyolefins, like polyethylene (PE) and polypropylene (PP), polyethylene terephthalate (PET), polyvinyl chloride (PVC) and alike.

The dimensions of the intermediate layer according to the invention, and hence the sandwich panels according to the invention, may range from 0,5 m to 5 m, such as in the range of 0,75 m to 2 m in width and 0,5 to 5 m, such as 0,75 m to 3m in length.

According to a fifth independent aspect of the invention, a process to produce a sandwich panel is provided. The process comprises the provision of at least a first outer layer and an intermediate layer. The intermediate layer is an intermediate layer according to the first aspect of the invention, or an intermediate layer comprising a first open side and a second side, the first outer layer being attached to the first open side, this intermediate layer comprising a plurality of cells, each cell having a cell circumference being defined by a plurality of walls, said plurality of walls comprising at least a first pair of walls that are mutually parallel and at least two or more further walls, each further wall being non-parallel to the first pair of walls; for each part of the cell circumference between the first wall of the first pair of mutually parallel walls and the second wall of the first pair of mutually parallel walls, the part of the cell circumference comprises at least one of the at least two or more further walls and this part of said cell circumference comprises at least one opening extending from the first open side towards the second side. The second side is a closed side being closed by a sheet, said sheet having a perimetrical edge, the height of the perimetrical edge at least along the part of the perimetrical edges being non-perpendicular to the direction of the first pair of walls, is less than the height of the walls.

The process comprises the steps of:
- Providing the intermediate layer;
- providing a first outer layer;
- attaching the first outer layer to at least the edge of the walls at the first side of the intermediate layer.

The at least one opening may extend from the fist open side up to the second side. Preferably the first outer layer is a flat plate.

According to some embodiments of the process of the invention, the openings may extend from the fist outer layer up to the second side.

According to some embodiments of the process of the invention, the intermediate layer may be an intermediate layer according to the first aspect of the invention having a second open end, the sandwich panel further comprising a second outer layer. The process further may comprise the steps of attaching the second outer layer to at least the edge of the walls at the second side of the intermediate layer.

According to some embodiments of the process of the invention, the coupling step may comprise
- heating at least the edge of the walls which are parallel to the plane;
- placing the first outer layer on the heated edges of the walls at a first side of the intermediate layer thereby providing a stack of layers;
- if applicable, placing the second outer layer on the heated edges of the walls at a second side of the intermediate layer, thereby providing a stack of layers;
- cooling the stack of layers to provide a sandwich panel.

According to some embodiments of the process of the invention, the heating may be done using heating plates.

The process of heating using heated plats is known as heating mirror, heat mirror, hot plate, heat plate, welding mirror or welding mirror plate. Alternatively, the heating may be done using IR wave heating.

Possibly the first and if applicable the second sheet is heated prior to placing the sheet or sheets on the heated edges.

According to some embodiments of the process of the invention, the process comprising the step of curving the stack of layers, the axis of curvature being parallel to the first pair of walls, during cooling the stack of layers. Doing this provides a curved sandwich panel in a fairly easy way without complex manipulation steps being necessary, and a relatively low force which is to eb applied on the stacked layers

According to a fifth independent aspect of the invention, a sandwich panel according to the second, third or fourth aspect of the invention is used as a part of a side of a container, as a part of a side of a swimming pool or as a part of a side of a fence.

According to some embodiments, the curved containers may be tanks or silos. According to other some embodiments, the swimming pools are swimming pools with curved sides. According to other some embodiments, the fences are curved fences.

### Brief Description of the Drawings

Fig.1 to 5 show a schematically view of an intermediate layer for a sandwich panel according to the invention.
Fig. 6a to 6d and fig. 7a to 7d show schematically a process to make a sandwich panel according to the invention.
Fig. 8 shows schematically alternative circumferences of cells of an intermediate layer according to the invention.

In the figures, the same reference number refers to the same or to a similar feature.

### Detailed Description of Embodiment(s)

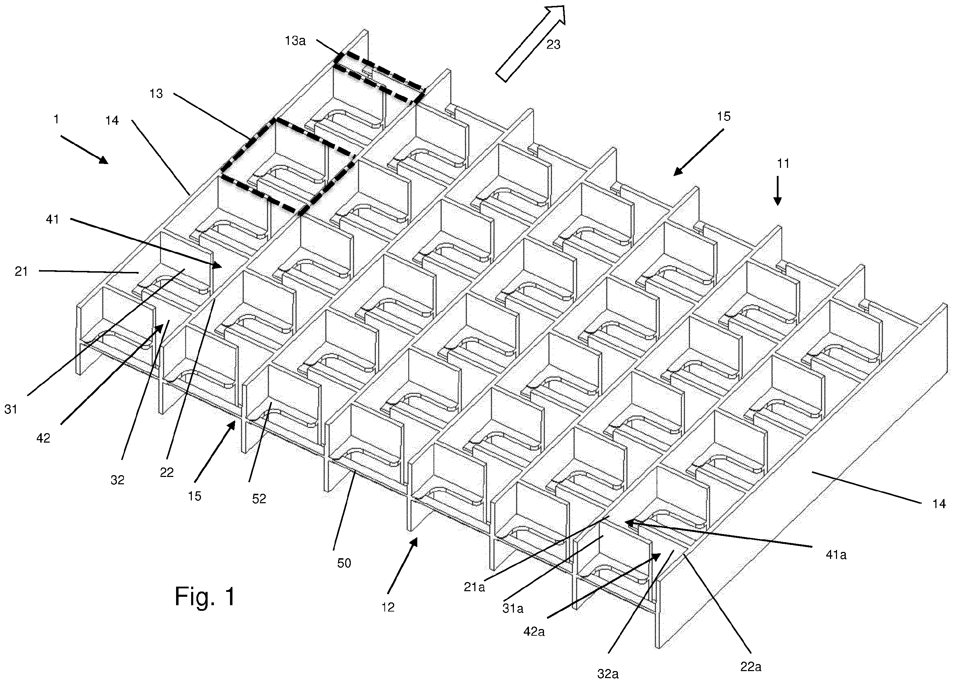

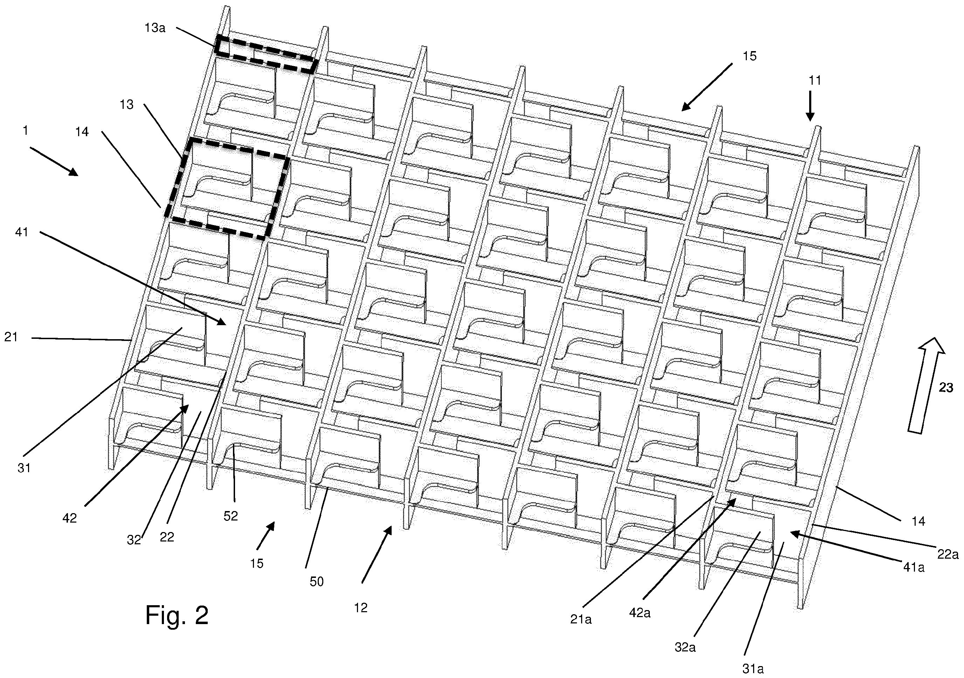

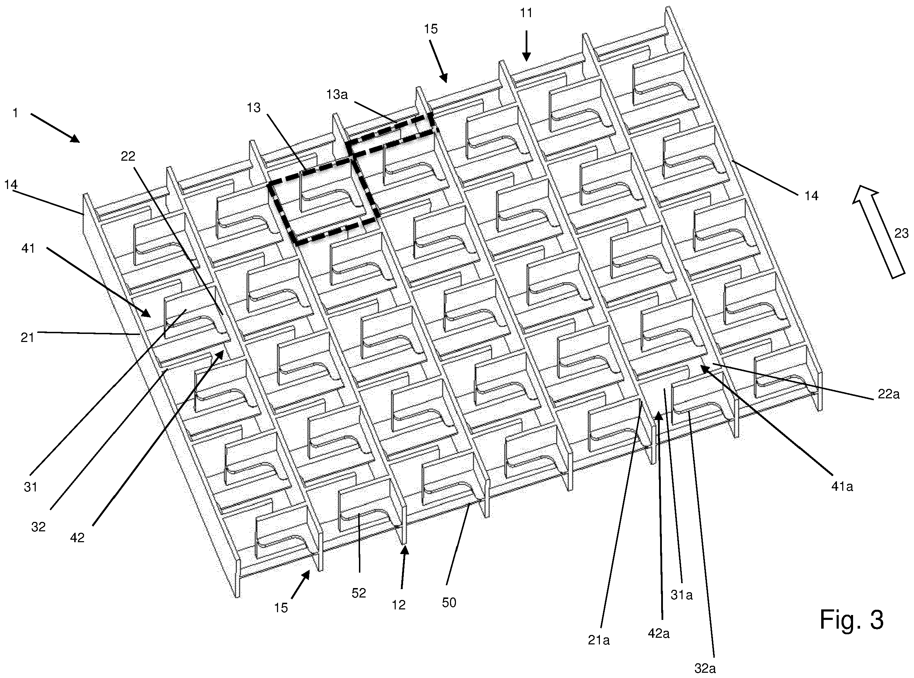

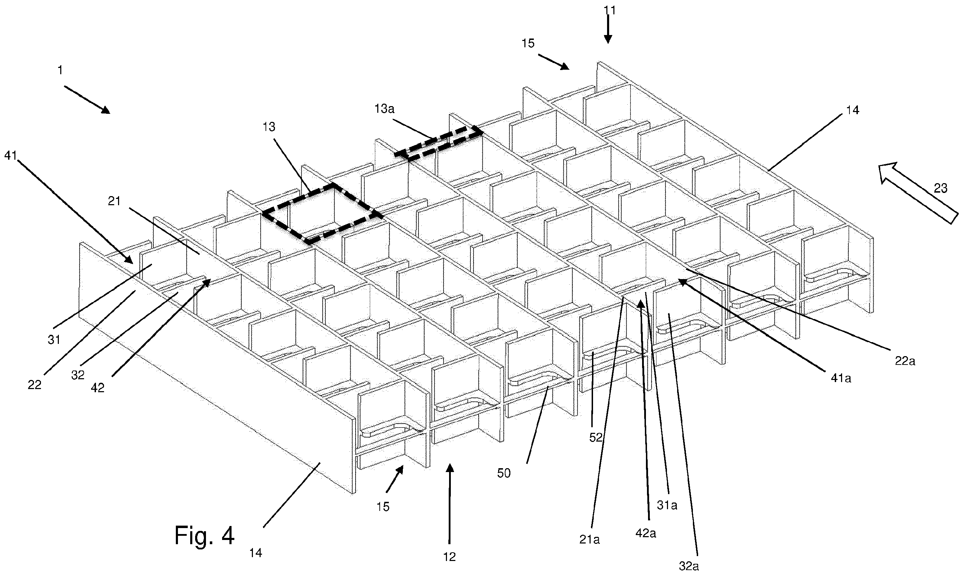

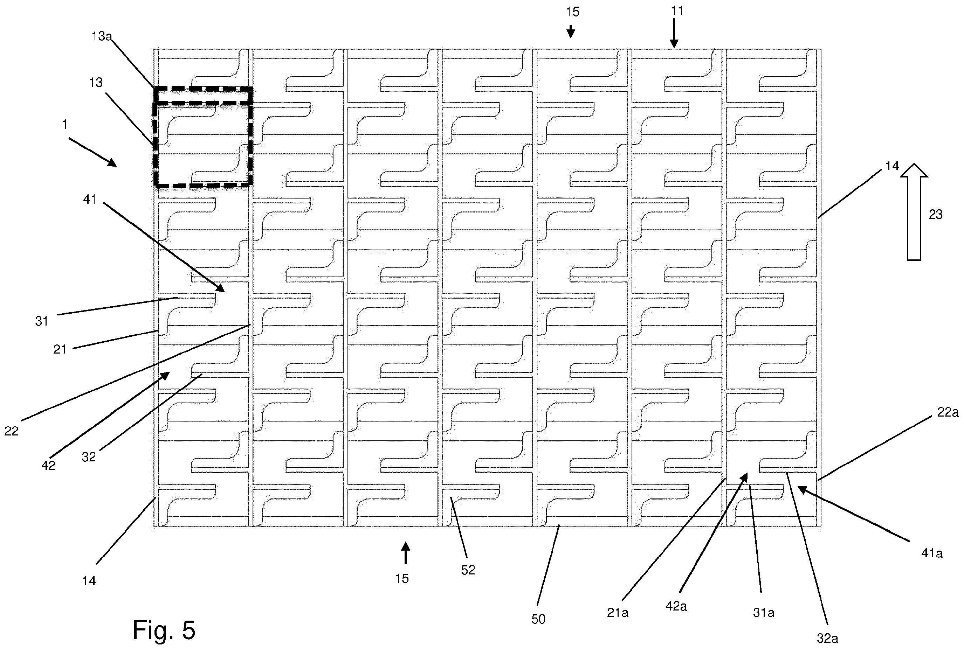

An intermediate layer 1 for a sandwich panel is shown in figure 1 to 4. Figure 1, 2, 3 and 4 show a perspective view of the intermediate layer 1. Figure 5 is a top view. The intermediate layer 1 has a first open side 11 and a second open side 12. In the intermediate layer 1, a plurality of cells 13 of a first type are visible, as well as a plurality of cells 13a of a second type.

Each cell 13 of the first type of cells has a cell circumference being defined by a plurality of walls being a first pair of walls 21 and 22 that are mutually parallel along a direction 23 and two further walls 31 and 32. Each further wall 31 and 32 is non-parallel to the first pair of walls 21 and 22. The first pair of walls 21 and 22 and the two further walls 31 and 32 are even perpendicular in this embodiment. The cell circumference is about square.

For each part of the cell circumference between the first wall 21 and the second wall 22, this circumference part comprises at least one of the at least two or more further walls 31 and 32 and at least one opening 41 or 42 extending from the first open side (11) up to the second side 12. Thus the further walls do not bridge or form an integral contact between the first wall 21 and the second wall 22.

The same applies for each cell 13a of the second type of cells. These cells 13a has a cell circumference being defined by a plurality of walls being a first pair of walls 21a and 22a that are mutually parallel along a direction 23 and two further walls 31a and 32a, each further wall 31a and 32a being non-parallel to the first pair of walls 21a and 22a. The first pair of walls 21a and 22a and the two further walls 31a and 32a are even perpendicular in this embodiment. The cell circumference is rectangular.

For each part of the cell circumference between the first wall 21a and the second wall 22a, this circumference part comprises at least one of the at least two or more further walls 31a and 32a and at least one opening 41a or 42a extending from the first open side 11 up to the second side 12. Thus the further walls do not bridge or form an integral contact between the first wall 21a and the second wall 22a.

All walls 21 and 21a of adjacent cells 13 and 13a form one long wall-part in the direction 23. As an example, all walls have a height of about 50 mm. The distance between walls 21 and 22 and between 21a and 22a is about 50 mm. The length of the walls 31, 32, 31a and 32a are about 30 mm, hence an opening of about 20 mm is provided. The length of the walls 21 and 22 is about 50 mm, the length of the walls 21a and 22a is about 6 a 8 mm. The thickness of all walls is in the range of 2 to 2,5 mm.

This intermediate layer 1 allows to be bended in a direction perpendicular to the direction 23, hence with a bending axis parallel to direction 23. In order to keep the cells together, spacers 50 are provided from a wall 21 to a wall 22, and this at about half the height of the walls. The spacers 50 have a thickness of about 1,5 mm. In cells 13 of the first type of cells, the corners formed by a wall 21 or 22 and a wall 31 or 32 are reinforced at half the height of the wall by a corner piece 52. The corner piece 52 has a thickness of about 2 to 2,5 mm.

The intermediate layer 1 is provided by injection moulding, in this embodiment by injection moulding of polypropylene.

According to an alternative embodiment, the width of the cells of the second type is nearly zero. This means that walls 31 and 32a and 32 and 31a from adjacent cells are contacting each other. Still this is to be understood as part of the invention, as such cell of the second type with width zero still is a cell which has an aperture in each bridge from the first wall 21a to the second wall 22a.

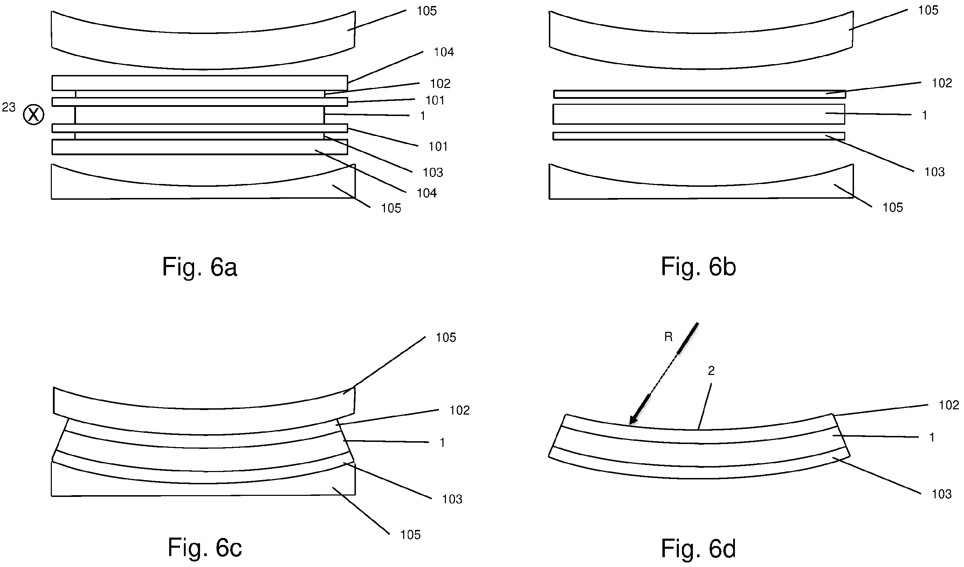

As shown in figures 6a to 6d, a sandwich panel 2 is made making use of an intermediate layer 1.

The intermediate layer 1 is positioned between two welding mirrors 101. On the other side of each of the welding mirrors 101, a first outer layer 102 and a second outer layer 103 is provided. These outer layers 102 and 103 may be identical or mutually different extruded sheets, e.g. two sheets of polypropylene with a thickness in the range of 6 to 14 mm. These two outer layers are further, at their opposite side, contacted by steel compression plates 104. This layered structure may already be positioned between the gap of a profiled mould press with moulds 105 and is subjected to a heating action by heating the welding mirrors 101. By heating the welding mirrors 101, the outer edges of the walls along the open sides 11 and 12 will be heated, weakened and brought to a temperature possibly close to melting. Similarly the outer layers 102 and 103 are heated and at the side contacting the welding mirror 101, weakened and brought to a temperature possibly close to melting. This is shown in figure 6a. The direction 23 of the first walls of the intermediate layer are parallel to the bending direction of the moulds 105 of the profiled mould press.

As shown in figure 6b, once the required temperature is obtained, the compression plates 104 and the welding mirrors 101 are removed from the stack. When this is finalised, the moulds 105 of the profiled mould press are closed as shown in figure 6c. The edges of the walls and the inner side of the outer layers may, for the used polypropylene, be at a temperature of about 200 to 220 °C. The profiled mould press may execute a force of about 1000 kg/m². Because the outer layers 102 and 103, and the edges of the walls of the intermediate layer 1 are weakened, the edges of the walls of intermediate layer 1 will deform slightly. At the concave side of the intermediate layer, the top edges of the walls will be compressed and deform inwards the intermediate layer 1 while coupling to the first outer layer 102. At the convex side of the intermediate layer 1, the edges of the walls will couple to the outer layer 103 and will be stretched to some extent. The bended combination of outer layers 102 and 103 and intermediate layer 1 is cooled to harden again the weakened polymer. After cooling, a bended sandwich panel 2 is provided as shown in figure 6d. The bending radius R may be about 3 m. The sides of the sandwich panel 2 may be provided by the side walls 14 of the intermediate layer 1. They can be welded to similar or identical sides making use of the known techniques such as plate welding techniques, providing but-to-but welded sandwich panels. As such circular tubular volumes, like tanks, swimming pools and alike, may be formed, having a diameter double the bending radius of the bended sandwich panels.

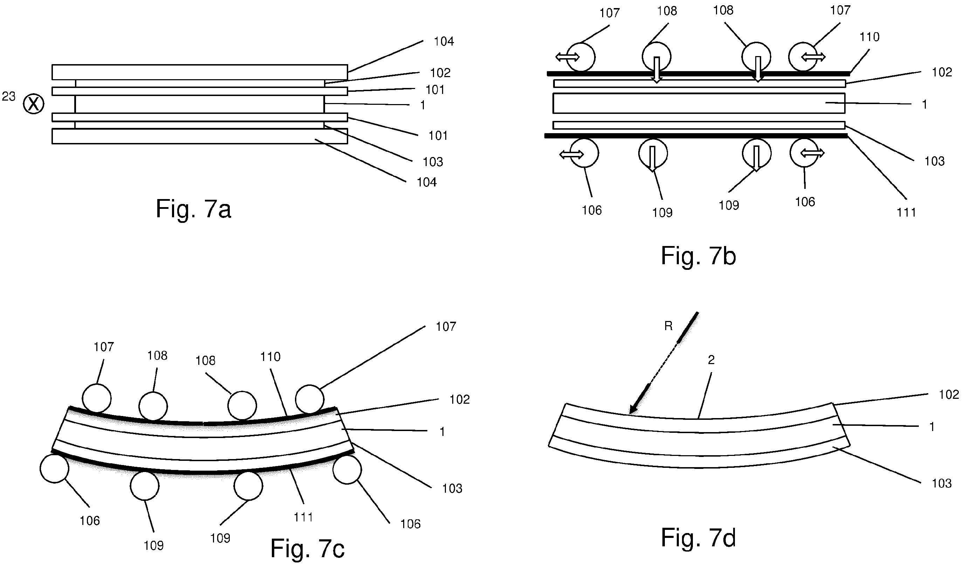

An alternative process is schematically shown in figures 7a to 7d. The process is identical to the one shown in figures 6a to 6d, except that a different kind of press is used to bend the combination of first and second layer and intermediate layer. The layers and intermediate layer are heated in figure 7a identical to the heating shown in figure 6a. For bending, the heated stack of first and second outer layers 102 and 103, and intermediate layer 1, are not placed between moulds 105, but are placed between two bendable steel plates, on their turn contacted by 2 or more rolls which can be displaced in at least one direction. As an example shown in figure 7b, the stack of first and second outer layers 102 and 103, and intermediate layer 1, is supported by a bendable steel plate 111, on its turn coupled to and supported by two rollers 106, one at each side of the plates 110, and by two rollers 109 also at the lower side of the plate 110. At the top side of the stack, a similar plate 110 is provided, coupled to two rollers 107 at the side of the plate, and two rollers 108 spread evenly over the width of the plate 110. The rollers 108 are able to be displaced downwards, the rolls 107 sidewards. As such the upper plate 110 can be bended downwards to some extent. Similarly, rollers 109 are able to be displaced downwards, the rolls 106 sidewards. As such the lower plate 111 can be bended downwards to some extent. This is schematically shown in figure 7b. During bending in figure 7c, the stack is clamped between the bended plates 110 and 111 and is bended itself. The stack is partially cooled, and the force is removed. This is shown in figure 7d. The bended sandwich panel 2 is further cooled.

Alternative embodiments for intermediate layers are similar to the ones shown in figures 1 to 5. An alternative embodiment is an intermediate layer where the lower, second side of the intermediate layer is a closes side, closed by a sheet of polymer which is e.g. obtained during the injection moulding process. The walls 14 provide part of the perimetrical edge of the sheet. This perimetrical edge is preferably less in height along its parts not parallel to the direction 23.

Another alternative embodiment is an intermediate layer where the sides indicated with reference 15, which are the sides of the intermediate layer perpendicular to the side walls 14, are not completely open as in figures 1 to 4, but have a wall of limited height, the wall being provided with its lower edge along the second side 12. This wall may have a height e.g. not more than 50% of the height of the walls 14.

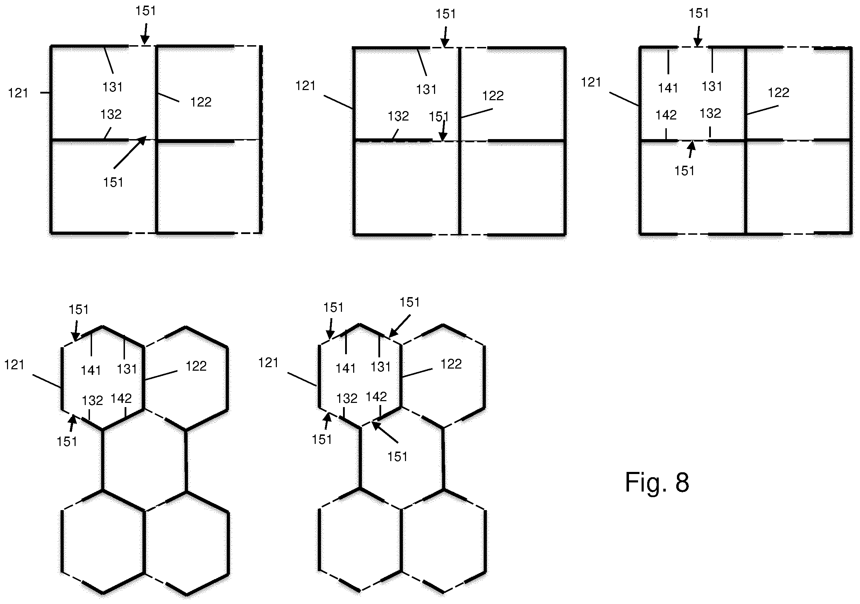

Alternative set-ups of walls in cells of an intermediate with one open side and a second side, optionally also an open side, are shown in figure 8, where a first pair of walls are referred to as 121 and 122. Further pairs of walls are referred to as pair of walls 131 and 132 and as pair of walls 141 and 142. The circumferences of the cells may, as shown, be rectangular, more specific square or even hexagonal, such as regularly hexagonal circumferences. For each cell circumference, in each wall-link between the walls of the first pair of walls 121 and 122, at least one opening 151 is provided.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. An intermediate layer (1) for a sandwich panel, the intermediate layer (1) having a first open side (11) and a second side (12, 112), said intermediate layer (1) comprising a plurality of cells (13), each cell (13) having a cell circumference being defined by a plurality of walls (21, 22, 31, 32), said plurality of walls comprising:
• at least a first pair of walls (21, 22) that are mutually parallel along a direction (23);
• at least two or more further walls (31, 32), each further wall (31, 32) being non-parallel to the first pair of walls (21, 22);
**characterised in that** for each part of the cell circumference between the first wall (21) of the first pair of mutually parallel walls (21, 22) and the second wall (22) of the first pair of mutually parallel walls (21, 22), said part of said cell circumference comprises at least one of said at least two or more further walls (31, 32) and said part of said cell circumference comprises at least one opening (41, 42) extending from the first open side (11) towards the second side (12, 112), said second side (12, 112) being one of
• an open side (12) and
• a closed side (112) being closed by a sheet (140), said sheet (140) having a perimetrical edge (141) whose height along the perimetrical edge is less than the height of the walls.

2. An intermediate layer according to claim 1, wherein the at least one opening (41, 42) extends from the fist open side up to the second side

3. An intermediate layer according to claim 1 or 2, wherein the first pair of walls are linked to each other by means of a strip of material.

4. An intermediate layer according to any one of the claims 1 to 3, wherein said cells circumference is quadrilateral.

5. An intermediate layer according to any one of the preceding claims, wherein the intermediate layer is a provided from polymeric material.

6. An intermediate layer according to claim 5, wherein the intermediate layer is injection moulded.

7. A sandwich panel comprising a first outer layer and at least one intermediate layer according to any one of the preceding claims, the first open side of said intermediate layer being attached to the first outer layer.

8. A sandwich panel according to claim 7, wherein said second side being an open side, said sandwich panel further comprising a second outer layer, said second side being attached to this second outer layer, said first outer layer and said second outer layer are provided from polymeric material and are extruded layers, the intermediate layer is provided from polymeric material, said intermediate layer is injection moulded, the sandwich panel is a flat sandwich panel.

9. A sandwich panel comprising a first outer layer and at least one intermediate layer attached to the first outer layer, the intermediate layer comprising a first open side and a second side, the first outer layer being attached to the first open side, said intermediate layer comprising a plurality of cells, each cell having a cell circumference being defined by a plurality of walls, said plurality of walls comprising:
• at least a first pair of walls that are mutually parallel;
• at least two or more further walls, each further wall being non-parallel to the first pair of walls;
for each part of the cell circumference between the first wall of the first pair of mutually parallel walls and the second wall of the first pair of mutually parallel walls, said part of said cell circumference comprises at least one of said at least two or more further walls and said part of said cell circumference comprises at least one opening extending from the first open side towards the second side, said second side being a closed side being closed by a sheet, said sheet having a perimetrical edge, the height of the perimetrical edge at least along the part of the perimetrical edges being non-perpendicular to the direction of the first pair of walls, is less than the height of the walls.

10. A sandwich panel according to any one of the claims 7 to 9, wherein the sandwich panel is a flat sandwich panel.

11. A sandwich panel according to any one of the claims 7 or 9, wherein the sandwich panel is curved, the axis of curvature being parallel to the direction of the first pair of walls.

12. A process to produce a sandwich panel comprising at least a first outer layer and an intermediate layer according to any one of the claims 1 to 6, or an intermediate layer comprising a first open side and a second side, the first outer layer being attached to the first open side, said intermediate layer comprising a plurality of cells, each cell having a cell circumference being defined by a plurality of walls, said plurality of walls comprising:
• at least a first pair of walls that are mutually parallel;
• at least two or more further walls, each further wall being non-parallel to the first pair of walls;
for each part of the cell circumference between the first wall of the first pair of mutually parallel walls and the second wall of the first pair of mutually parallel walls, said part of said cell circumference comprises at least one of said at least two or more further walls and said part of said cell circumference comprises at least one opening extending from the first open side towards the second side, said second side being a closed side being closed by a sheet, said sheet having a perimetrical edge, the height of the perimetrical edge at least along the part of the perimetrical edges being non-perpendicular to the direction of the first pair of walls, is less than the height of the walls said process comprises the steps of:
• providing said intermediate layer;
• providing a first outer layer;
• attaching the first outer layer to at least the edge of the walls at the first side of the intermediate layer.

13. A process according to claim 12, wherein the openings extend from the fist outer layer up to the second side.

14. A process according to claim any one of the claims 12 to 13, wherein the coupling step comprises
• heating at least the edge of the walls which are parallel to the plane;
• placing the first outer layer on the heated edges of the walls at a first side of the intermediate layer thereby providing a stack of layers;
• if applicable, placing the second outer layer on the heated edges of the walls at a second side of the intermediate layer, thereby providing a stack of layers;
• cooling the stack of layers to provide a sandwich panel.

15. A process according to any one of the claims 12 to 14, the process comprising the step of curving the stack of layers, the axis of curvature being parallel to the first pair of walls, during cooling the stack of layers.

16. The use of a sandwich panel according to any one of the claims 7 to 11, as a part of a side of a container, as a part of a side of a swimming pool or as a part of a side of a fence.
